# EUROPEAN PATENT APPLICATION

(11) **EP 3 196 737 A1**
(43) Date of publication of application: **26.07.2017**
(21) Application number: 16152523.3
(22) Date of filing: 25.01.2016
(51) Int. Cl.: G06F 3/023, G06F 3/0362

(54) **SIMPLIFIED INPUT DEVICE**

(71) Applicant: DHC Specialty Corp., Taipei (TW)
(72) Inventor: Hsieh, Ming-Che, Taipei (TW); Hsiao, Yuan-Chen, Taipei (TW); Tang, Sheng-Yi, Taipei (TW)
(74) Representative: Zinnecker, Armin

(57) **Abstract**

A simplified input device (10) has a display module (14) and a processing module (13). When the processing module (13) receives a confirming command produced by an input module (15), the processing module (13) loads a selected symbol. When the selected symbol is a typographical symbol, the processing module (13) displays the selected symbol on a position of an input cursor (1421). When the selected symbol is an input cursor moving symbol (1412), the processing module (13) moves the position of the input cursor (1421). Therefore, a user types letters, and moves the input cursor (1421) to a position of a wrong letter to input another letter for quickly correcting the wrong letter. Further, a connecting module (12) receives typographical symbol setting data to update the language of the typographical symbols (1411). The language is not limited and enhanced convenience in use is provided.

## Description

### 1. Field of the Invention

The present invention relates to an input device, and particularly to a simplified input device.

### 2. Description of the Related Art

Users can type or enter commands or messages to an electronic device by an input device. For example, an input device of a personal computer or a notebook computer may be a keyboard, and the user can type and enter commands to the personal computer or the notebook computer by pressing the keyboard. The keyboard comprises a plurality of buttons, and each button stands for a specific symbol or a letter. Therefore, the user can type words or enter commands by pressing the buttons of the keyboard.

In general, the keyboard of a computer comprises at least twenty-six buttons standing for the twenty-six letters in the English alphabet and ten buttons of the numbers 0-9. However, a tiny input device may not have enough space for accommodating all the buttons, and the tiny input device may only comprise fewer buttons.

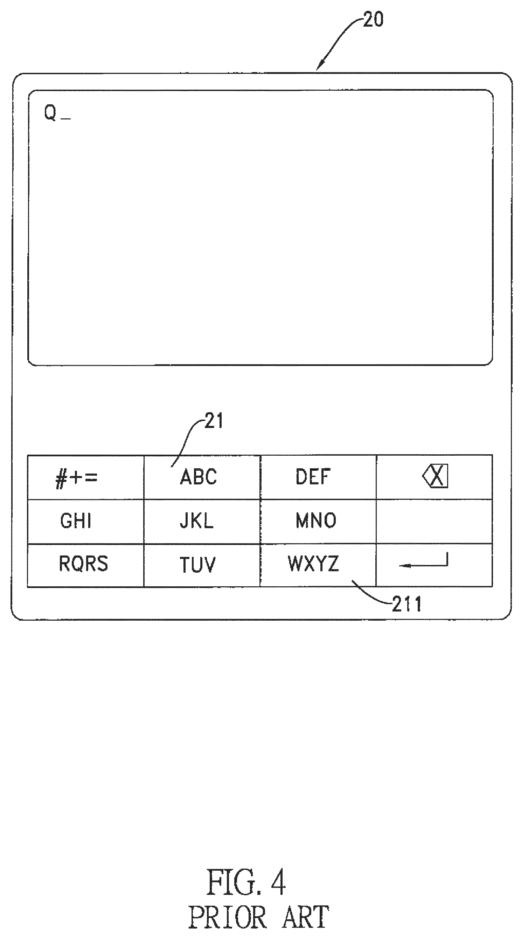

With reference to Fig. 4, a conventional input device 20 comprises only nine buttons 21. Each button 21 may stand for a plurality of different letters. When a user wants to input a particular letter, the user needs to repeatedly press the button 21 corresponding to the particular letter until the particular letter is shown. For example, when the user wants to input the letter Z, the user needs to repeatedly press the WXYZ button 211 for four times, and then the letter Z is shown.

However, the conventional input device 20 still comprises at least nine buttons 21. When an electronic device cannot comprise nine buttons or more, the user cannot type words or numbers.

Further, a language of the conventional input device 20 is set by a manufacturer of the conventional input device 20 and cannot be changed by the user, and the language of the conventional input device 20 is usually English. Therefore, no matter whether the mother language of the user is English, the user can type only English letters by the conventional input device 20. The conventional input device 20 may be inconvenient for the user whose mother language is not English.

An objective of the present invention is to provide a simplified input device. A user can type words by the simplified input device including less than nine buttons, and the user can change the language of the simplified input device.

To achieve the foregoing objective, the simplified input device comprises a storage module, a connecting module, a processing module, a display module, and an input module.

The connecting module receives typographical symbol setting data.

The processing module is electrically connected to the connecting module and the storage module. The processing module receives the typographical symbol setting data through the connecting module, and stores the typographical symbol setting data into the storage module.

The display module is electrically connected to the processing module, and comprises a virtual keyboard area and an input displaying area. The virtual keyboard area displays a plurality of typographical symbols, a plurality of input cursor moving symbols, and a selecting cursor. The selecting cursor can select one of the typographical symbols or one of the input cursor moving symbols. The input displaying area at least displays an input cursor.

The input module is electrically connected to the processing module. The input module produces a moving command or a confirming command, and outputs the moving command or the confirming command to the processing module.

The processing module loads the typographical symbol setting data stored in the storage module, and converts the typographical symbol setting data into the typographical symbols displayed in the virtual keyboard area.

When the processing module receives the moving command, the processing module moves the selecting cursor displayed in the virtual keyboard area according to the moving command.

When the processing module receives the confirming command, the processing module loads a selected symbol selected by the selecting cursor When the selected symbol is one of the typographical symbols, the processing module displays the selected symbol on a position of the input cursor, and moves the position of the input cursor to a next position. When the selected symbol is one of the input cursor moving symbols, the processing module moves the position of the input cursor corresponding to the selected symbol.

Since the input module needs to produce the moving command to move the input cursor to at least a next position and a previous position and needs to produce the confirming command to confirm the selected symbol, the input module comprises at least two navigation buttons and one confirming button. In an embodiment, the input module may be a knob button.

Therefore, even the number of the buttons of the input module is less than nine, the user still can normally type letters by the simplified input device of the present invention.

Since the virtual keyboard area of the display module displays the typographical symbols, the input cursor moving symbols, and the selecting cursor, the user may control the selecting cursor to select any one of the typographical symbols and the input cursor moving symbols by operating the input module. Then, the user may input the confirming command to confirm which one of the typographical symbols and the input cursor moving symbols is selected, and displays the selected symbol on the position of the input cursor or moves the input cursor to the next position.

The user can move the input cursor and type a letter on the position of the input cursor to improve efficiency of typing letters. Since the user can move the input cursor by using the input cursor moving symbols, the user can move the input cursor to a position of a wrong letter, and inputs another letter to quickly correct the wrong letter.

Further, the connecting module can receive the typographical symbol setting data to update the typographical symbol setting data stored in the storage module. Therefore, the user can update the language of the typographical symbols displayed in the virtual keyboard area. The language of the typographical symbols may not be limited by a manufacturer of the simplified input device and enhanced convenience in use is provided.

Other objectives, advantages and novel features of the invention will become more apparent from the following detailed description when taken in conjunction with the accompanying drawings.

### IN THE DRAWINGS

Fig. 1 is a schematic view of an embodiment of the present invention;
Fig. 2 is a block diagram of an embodiment of the present invention;
Figs. 3A-3D are schematic views of embodiments of display shots of a display module of the present invention; and
Fig. 4 is a schematic view of a conventional input device.

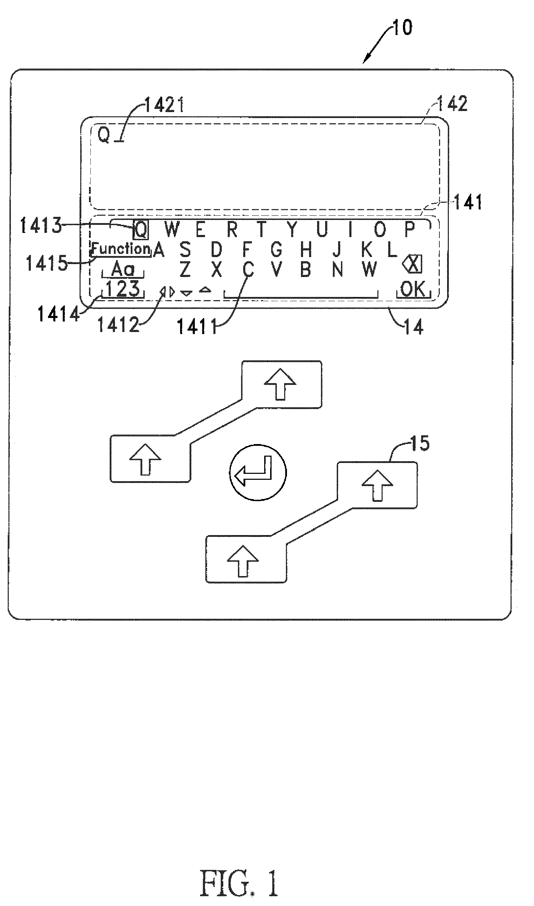

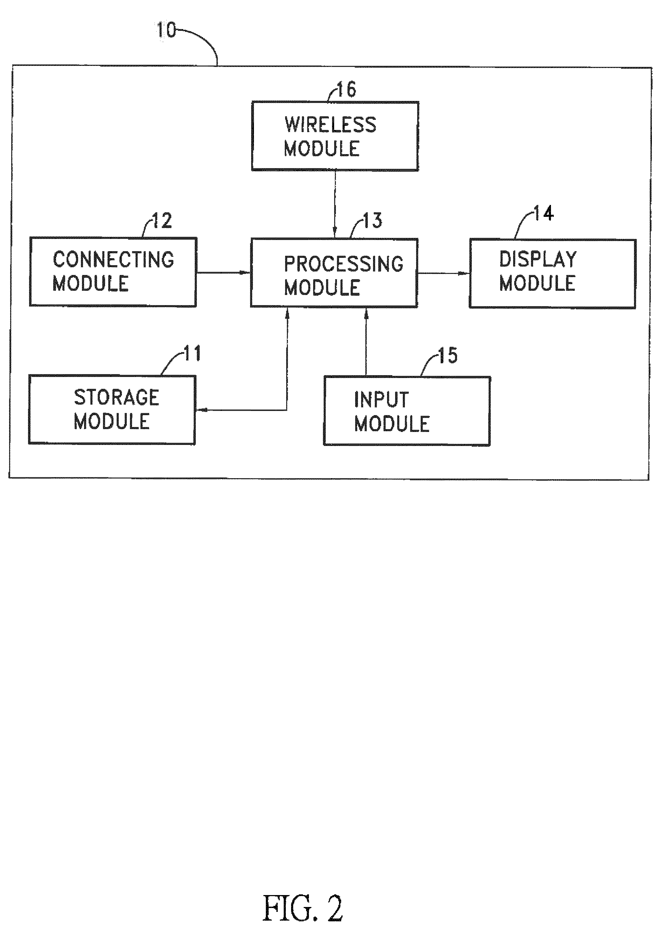

With reference to Figs. 1 and 2, a simplified input device 10 of the present invention is disclosed. The simplified input device 10 comprises a storage module 11, a connecting module 12, a processing module 13, a display module 14, and an input module 15. In an embodiment of the present invention, the display module 14 may be an ePaper, a TFT-LCD (Thin Film Transistor Liquid Crystal Display), a touch screen, or a Dot-Matrix LCD (Liquid Crystal Display). The connecting module 12 maybe a USB (Universal Serial Bus) port.

The connecting module 12 is electrically connected to an electronic device (not shown in the figure) through a connecting cable (not shown in the figure) to receive typographical symbol setting data produced by the electronic device.

The processing module 13 is electrically connected to the storage module 11 and the connecting module 12. The processing module 13 receives the typographical symbol setting data through the connecting module 12, and stores the typographical symbol setting data in the storage module 11.

The display module 14 is electrically connected to the processing module 13, and comprises a virtual keyboard area 141 and an input displaying area 142. The virtual keyboard area 141 displays a plurality of typographical symbols 1411, a plurality of input cursor moving symbols 1412, and a selecting cursor 1413. The selecting cursor 1413 is used to select any one of the typographical symbols 1411 or any one of the input cursor moving symbols 1412. The input displaying area 142 at least displays an input cursor 1421.

The input module 15 is electrically connected to the processing module 13. The input module 15 produces a moving command or a confirming command, and outputs the moving command or the confirming command to the processing module 13.

The processing module 13 loads the typographical symbol setting data stored in the storage module 11 and converts the typographical symbol setting data into the typographical symbols displayed in the virtual keyboard area 141 of the display module 14.

When the processing module 13 receives the moving command, the processing module 13 moves the selecting cursor 1413 displayed in the virtual keyboard area 141 of the display module 14 according to the moving command.

When the processing module 13 receives the confirming command, the processing module 13 loads a selected symbol selected by the selecting cursor 1413. When the selected symbol is one of the typographical symbols 1411, the processing module 13 displays the selected symbol on a position of the input cursor 1421, and moves the input cursor 1421 to a next position. When the selected symbol is one of the input cursor moving symbols 1412, the processing module 13 moves the input cursor 1421 corresponding to the selected symbol. In the embodiment, the next position is a position beside the position displaying the selected symbol.

Since the input module 15 needs to produce the moving commands to move the input cursor 1421 to at least a next position and a previous position and needs to produce the confirming command to confirm the selected symbol, the input module 15 comprises at least two navigation buttons and one confirming button.

Therefore, even the number of the buttons of the input module 15 is less than nine, the user may still type letters by the simplified input device 10 of the present invention.

The user may move the input cursor 1421 and type a letter on the position of the input cursor 1421. Namely, since the user may move the input cursor 1421 by using the input cursor moving symbols 1412, the user may move the input cursor 1421 to a position of a wrong letter, and inputs another letter to quickly correct the wrong letter.

In the embodiment, the input module 15 may consist of two navigation buttons and one confirming button, or may consist of four navigation buttons and one confirming button. Further, the input module 15 may be a pressable knob button. The knob button may be rotated clockwise or counterclockwise to produce the moving commands, and may be pressed to produce the confirming command.

The connecting module 12 of the simplified input device 10 may receive the typographical symbol setting data from the electronic device. The user may operate the electronic device to edit the typographical symbol setting data, and then the edited typographical symbol setting data may be transmitted to the connecting module 12 of the simplified input device 10 through the connecting cable. Then, the typographical symbol setting data may be stored in the storage module 11. Therefore, the user may edit the typographical symbols 1411 displayed in the virtual keyboard area 141 on demands, and the simplified input device 10 may provide a plurality of languages.

For example, the language of the typographical symbols 1411 set up by the manufacturer of the simplified input device 10 may be English. The user may edit the typographical symbol setting data by the electronic device to update the language of the typographical symbols 1411, and the edited typographical symbol setting data may be transmitted to the connecting module 12 of the simplified input device 10 through the connecting cable, and the edited typographical symbol setting data may be stored in the storage module 11. The updated language of the typographical symbols 1411 may be Japanese. Therefore, the user may type Japanese by using the input module 15 to operate the selecting cursor 1413 to select the typographical symbols 1411.

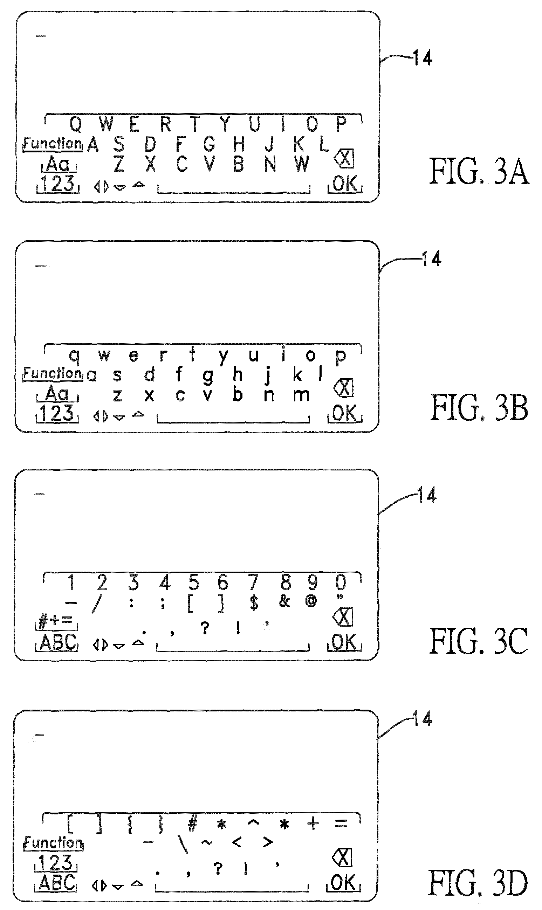

With reference to Figs. 3A-3D, the virtual keyboard area 141 further displays a virtual keyboard switching symbol 1414. When the processing module 13 receives the confirming command and when the selecting cursor 1413 selects the virtual keyboard switching symbol 1414, the processing module 13 changes a category- of the typographical symbols 1411 displayed in the virtual keyboard area 141. For example, with reference to Fig. 3A, the typographical symbols 1411 displayed in the virtual keyboard area 141 are capital English alphabets. When the user moves the selecting cursor 1413 to select the virtual keyboard switching symbol 1414 and inputs the confirming command by the input module 15, the processing module 13 changes the category of the typographical symbols 1411 , such as lowercase English alphabets, numbers, or punctuations, as shown in Figs. 3B-3D.

Therefore, when space of the virtual keyboard area 141 of the typographical symbols 1411 may not display all categories of the typographical symbols 1411, the user may change the category of the typographical symbols 1411 of the virtual keyboard area 141 to input various typographical symbols 1411 by using the virtual keyboard switching symbol 1414.

With reference to Fig. 1, the virtual keyboard area 141 further displays a quick input symbol 1415. When the processing module 13 receives the confirming command and when the selecting cursor 1413 selects the quick input symbol 1415, the processing module 13 displays a preset combination of typographical symbols 1411, such as "battery", on the position of the input cursor 1421, and moves the input cursor 1421 to the next position. For example, when the user selects and confirms the quick input symbol 1415, the position of the input cursor 1421 displays a word, such as "battery".

With reference to Fig. 2, the simplified input device 10 further comprises a wireless module 16. The wireless module 16 is electrically connected to the processing module 13. The wireless module 16 wirelessly receives input information, and outputs the input information to the processing module 13. Then, the processing module 13 may be wirelessly connected to another input device (not shown in the figure) through the wireless module 16 to receive the input information. Then, the processing module 13 displays a typographical symbol corresponding to the input information on the position of the input cursor 1421, and moves the input cursor 1421. Therefore, the user may input data to the simplified input device 10 by operating said another input device. For example, said another input device may be a blue-tooth keyboard. The user may use the blue-tooth keyboard to input data to the simplified input device 10 through wireless connection between the blue-tooth keyboard and the wireless module 16 of the simplified input device 10. In the embodiment, the wireless module 16 is a Blue-tooth module.

The storage module 11 of the simplified input device 10 further stores a plurality of sets of data, each set of the data has a filename. The processing module 13 has a data search function. When the processing module 13 executes the data search function, the processing module 13 loads at least one typographical symbol displayed on the input displaying area 142. Then, the processing module 13 compares the at least one typographical symbol with the filenames of the sets of data to search one set of data whose filename comprises the at least one typographical symbol, and the processing module 13 displays the filename of the searched set of data. Therefore, the user may search quickly a particular one of the sets of data to save time for searching.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A simplified input device (10), **characterized in that** the simplified input device (10) comprises:
a storage module (11);
a connecting module (12), receiving typographical symbol setting data;
a processing module (13), electrically connected to the connecting module (12) and the storage module (11); wherein the processing module (13) receives the typographical symbol setting data through the connecting module (12) and stores the typographical symbol setting data in the storage module (11);
a display module (14), electrically connecting to the processing module (13), and comprising:
a virtual keyboard area (141), displaying a plurality of typographical symbols (1411), a plurality of input cursor moving symbols (1412), and a selecting cursor (1412); wherein the selecting cursor (1412) selects one of the typographical symbols (1411) or one of the input cursor moving symbols (1412);
an input displaying area (142), at least displaying an input cursor (1421);
an input module (15), electrically connected to the processing module (13); wherein the input module (15) produces a moving command or a confirming command, and outputs the moving command or the confirming command to the processing module (13);
wherein the processing module (13) loads the typographical symbol setting data stored in the storage module (11), and converts the typographical symbol setting data into the typographical symbols (1411) displayed in the virtual keyboard area (141);
wherein when the processing module (13) receives the moving command, the processing module (13) moves the selecting cursor (1412) displayed in the virtual keyboard area (141) according to the moving command;
wherein when the processing module (13) receives the confirming command, the processing module (13) loads a selected symbol selected by the selecting cursor (1412);
wherein when the selected symbol is one of the typographical symbols (1411), the processing module (13) displays the selected symbol on a position of the input cursor (1421) and moves the input cursor (1421); wherein when the selected symbol is one of the input cursor moving symbols (1412), the processing module (13) moves the input cursor (1421) corresponding to the selected symbol.

2. The simplified input device (10) as claimed in claim 1, wherein:
the virtual keyboard area (141) of the display module (14) further displays a virtual keyboard switching symbol (1414);
when the processing module (13) receives the confirming command and when the selecting cursor (1412) selects the virtual keyboard switching symbol (1414), the processing module (13) changes a category of the typographical symbols (1411).

3. The simplified input device (10) as claimed in claim 1, wherein:
the virtual keyboard area (141) of the display module (14) further displays a quick input symbol (1415);
when the processing module (13) receives the confirming command and when the selecting cursor (1412) selects the quick input symbol (1415), the processing module (13) displays a preset combination of typographical symbols (1411) on the position of the input cursor (1421), and moves the position of the input cursor (1421).

4. The simplified input device (10) as claimed in claim 2, wherein:
the virtual keyboard area (141) of the display module (14) further displays a quick input symbol (1415);
when the processing module (13) receives the confirming command and when the selecting cursor (1412) selects the quick input symbol (1415), the processing module (13) displays a preset combination of typographical symbols (1411) on the position of the input cursor (1421), and moves the input cursor (1421).

5. The simplified input device (10) as claimed in any one of claims 1 to 4, further comprising a wireless module (16);
wherein the wireless module (16) is electrically connected to the processing module (13), wirelessly receives input information, and outputs the input information to the processing module (13);
wherein the processing module (13) receives the input information, displays a typographical symbol corresponding to the input information on the position of the input cursor (1421), and moves the input cursor (1421).

6. The simplified input device (10) as claimed in any one of claims 1 to 4, wherein:
the storage module (11) further stores a plurality of sets of data, and each set of data has a filename;
the processing module (13) further has a data search function;
when the processing module (13) executes the data search function, the processing module (13) loads at least one typographical symbol displayed on the input displaying area (142), compares the at least one typographical symbol with the filenames of the sets of data to search one set of data whose filename comprises the at least one typographical symbol, and displays the filename of the searched set of data.

7. The simplified input device (10) as claimed in any one of claims 1 to 4, wherein the display module (14) is an ePaper, a TFT-LCD (Thin Film Transistor Liquid Crystal Display), a touch screen, or a Dot-Matrix LCD (Liquid Crystal Display).

8. The simplified input device (10) as claimed in any one of claims 1 to 4, wherein the connecting module (12) is a USB (Universal Serial Bus) port.

9. The simplified input device (10) as claimed in claim 5, wherein the wireless module (16) is a blue-tooth module.
